# EUROPÄISCHE PATENTSCHRIFT

(11) **EP 0 312 069 B1**
(45) Veröffentlichungstag und Bekanntmachung des Hinweises auf die Patenterteilung: **13.01.1993**
(21) Anmeldenummer: 88117063.3
(22) Anmeldetag: 13.10.1988
(51) Int. Cl.: G01N 35/00

(54) **Vorrichtung zum optischen Untersuchen von Teststreifen und Vorrichtungen zum Befestigen der Teststreifen auf einem Trägerband**
Device for optical testing of test-strips and means for mounting said test-strips on a tape
Dispositif de contrôle optique des bandes de test et dispositifs de fixation des bandes de test sur une bande transporteuse

(30) Priorität: 16.10.1987 DE 3735157
(43) Veröffentlichungstag der Anmeldung: 19.04.1989
(73) Patentinhaber: BOEHRINGER MANNHEIM GMBH, 68298 Mannheim (DE)
(72) Erfinder: Mann, Karlheinz, D-8120 Weilheim (DE)
(74) Vertreter: Fincke, Karl Theodor, Dipl.-Phys. Dr.

(56) Entgegenhaltungen:
- EP-A- 0 054 849
- US-A- 3 609 045
- US-A- 3 980 437
- US-A- 4 689 202

## Beschreibung

Die Erfindung betrifft eine Vorrichtung zum optischen Untersuchen von mit Testflüssigkeit zu tränkenden, langgestreckten, Testfelder aufweisenden Teststreifen mit einem die Teststreifen auf einer einer optischen Meßeinrichtung zugewandten Seite tragenden Träger, mittels dem die Teststreifen schrittweise an der optischen Meßeinrichtung vorbei zu bewegen sind.

Bei einer nach der US-PS 3 980 437 bekannten ersten Ausführungsform einer Vorrichtung ist der Träger ein Schieber mit einer in Schieberichtung verlaufenden Einlagemulde für einen Teststreifen. Der Schieber ist in die optische Meßeinrichtung zu schieben und aus der optischen Meßeinrichtung wieder herauszuziehen.

Bei einer nach der US-PS 3 980 437 bekannten zweiten Ausführungsform der Vorrichtung sind die Teststreifen in Längsrichtung untereinander einstückig zu einem Band verbunden, das auf dem Weg zwischen zwei Stützrädern durch eine optische Meßeinrichtung bewegt wird.

Aufgabe der Erfindung ist es, eine Vorrichtung nach dem Oberbegriff des Anspruchs 1 anzugeben, bei der die Teststreifen auf dem Trägerband vorab, also vor einer Messung, ausgerichtet sind und in ihrer Ausrichtung nicht verändert werden können.

Zur Lösung dieser Aufgabe ist die Vorrichtung dadurch gekennzeichnet, daß der Träger ein Trägerband ist, auf dem die Teststreifen quer zur Längsrichtung des Trägerbands in untereinander gleichen Abständen wenigstens nächst den Rändern des Trägerbands befestigt sind.

Da nach der Erfindung die Teststreifen auf dem Trägerband in gleichen Abständen befestigt werden, ergeben sich folgende Vorteile:
1.) Da durch die Befestigung die geometrische Lage der Teststreifen in bezug zum Trägerband erhalten bleibt, können in einem Gerät an verschiedenen Orten Einrichtungen zur Dosierung von Testflüssigkeit, zur Heizung von Testfeldern und zur Messung der Teststreifen angeordnet sein, ohne daß ein jeweils neues Ausrichten der Teststreifen auf dem Trägerband erforderlich ist.
2.) Das Trägerband kann bei Bedarf vorwärts und rückwärts bewegt werden, ohne daß sich an der Ausrichtung der Teststreifen auf dem Trägerband etwas ändert.
3.) Die Teststreifen können während der schrittweisen Bewegung des Trägerbands nicht auf dem Trägerband verrutschen oder - da sie flach auf dem Trägerband gesichert aufliegen - an irgendwelchen Vorrichtungsteilen hängenbleiben.
4.) Der Verbrauch an Trägerbandmaterial ist erheblich verringert, da die Abstände der Teststreifen auf dem Trägerband wenige Millimeter betragen können. Dies gestattet auch eine Verringerung der Baugröße der Meßeinrichtung bzw. des gegebenenfalls vorgesehenen Gesamtgeräts bei entsprechend verringerter Schrittgeschwindigkeit des Trägerbands, ohne daß die Inkubationszeit (die Zeit zwischen der Tränkung eines Teststreifens und der Messung des getränkten Teststreifens) verringert werden muß.
5.) Die Teststreifen können sich auf dem Transportband nicht werfen (aufbiegen oder durchbrechen), wozu insbesondere getränkte Teststreifen neigen.
6.) Bei vollautomatischen Meßeinrichtungen bzw. Gesamtgeräten können die Trägerbänder mit den an ihnen befestigten Teststreifen vorkonfektioniert werden, insbesondere dann, wenn die Tränkung der Teststreifen innerhalb des Gesamtgeräts erfolgt. Das Gesamtgerät wird dadurch stark vereinfacht und weniger störanfällig im Betrieb.

Bevorzugte Befestigungsarten der Teststreifen auf dem Trägerband sind in den Ansprüchen 2 und 3 angegeben.

Wie gering der Abstand der Teststreifen auf dem Trägerband sein kann, ergibt sich aus Anspruch 4.

Besonders einfach und betriebssicher ausgebildete Einrichtungen zum Befestigen der Teststreifen auf dem Trägerband sind in den Ansprüchen 5 und 6 angegeben.

Die Erfindung wird im folgenden an zwei Ausführungsbeispielen unter Hinweis auf die beigefügten Zeichnungen beschrieben.
- Fig. 1: zeigt eine Ausbildung einer ersten Vorrichtung;
- Fig. 2: zeigt eine Ausbildung einer zweiten Vorrichtung.

Gleiche Bezugsziffern bezeichnen funktionell gleiche Elemente.

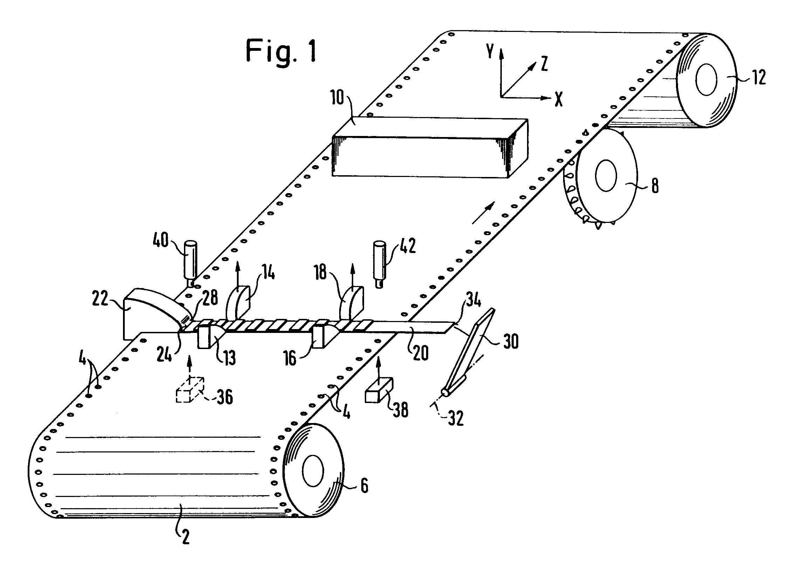

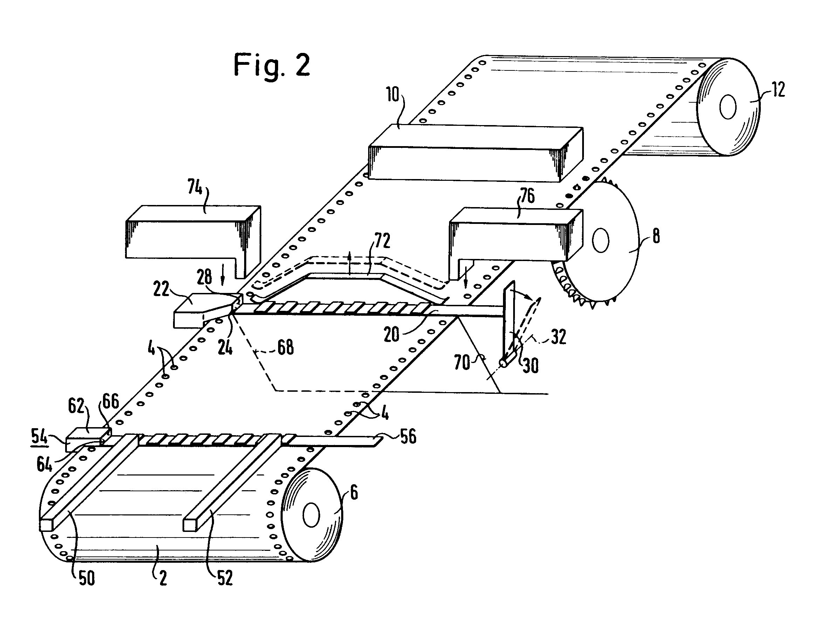

Die Figuren 1 und 2 zeigen ein Trägerband 2 mit Randlochung 4, das von einer Vorratswalze 6 abgewickelt wird und mittels einer Stachelwalze 8 schrittweise unter einer optischen Meßeinrichtung 10 zu einer Aufwickelwalze 12 transportiert wird. Der dort entstehende Wickel des Trägerbands 2 mit auf ihm befindlichen Teststreifen ist Abfall.

Fig. 1 zeigt oberhalb eines waagerechten Abschnitts des Trägerbands 2 stromaufwärts der Meßeinrichtung 10 Einlegeführungsblöcke 13,14,16,18 für die Teststreifen 20. Die unteren Begrenzungsflächen der Einlegeführungsblöcke 13,14,16,18 liegen in dem dargestellten Zustand dicht am Trägerband 2. Ihre oberen Begrenzungsflächen sind bis zu ihren aufeinander zu weisenden unteren Kanten abgerundet und bilden Einlegetrichter für die Teststreifen 20. Die Blöcke 13,16 sind vorrichtungsfest, die Blöcke 14,18 werden während der Schrittbewegungen des Trägerbands 2 durch nicht dargestellte Mittel angehoben. Nächst dem einen Rand des Trägerbands befindet sich ein das Trägerband 2 übergreifender Anschlagblock 22 für die ihm zugewandte Stirnfläche 24 der Teststreifen 20. Aus der in Fig. 1 dargestellten Stellung ist der Teststreifen 20 nach links bis an eine (in Fig. 1 rechte) Kante einer Anschlagfläche 28 des Anschlagblocks 22 zu schieben.
Hierzu dient eine Ausrichtplatte 30, die im Ausführungsbeispiel der Fig. 1 um eine vorrichtungsfeste Achse 32 verschwenkbar ist und an die der Stirnfläche 24 abgewandt liegende Stirnfläche 34 zum Verschieben des Teststreifens 20 bis an die Anschlagfläche 28 verschwenkt werden kann.

Unterhalb des Trägerbands 2 sind nächst den Rändern des Trägerbands 2 zwei Heizwiderstände 36,38 simultan auf- und abbewegbar, die mit zwei oberhalb des Trägerbands 2 angeordneten Prägestempeln 40,42 zum Ansiegeln des Teststreifens 20 auf dem Trägerband 2 zusammenwirken.

Als Heizwiderstände 36, 38 wurden Keramikwiderstände verwendet, die bis auf etwa 150 °C erhitzt und von unten an ein Trägerband 2 aus Papier geführt wurden, um Teststreifen 20 aus Polystyrol an dem Trägerband 2 anzusiegeln. Die Prägestempel 40, 42 waren kalt, hatten einen Durchmesser von etwa 2 mm und wurden mit etwa 5 N gegen die Heizwiderstände 36, 38 gedrückt. Eine Andruckdauer von 1 - 2 s erwies sich auch bei nassen Teststreifen 20 als ausreichend.

Bei der Ausführungsform nach Fig. 2 sind oberhalb des Trägerbands 2 in einem Abstand von der Meßeinrichtung vorrichtungsfeste Anschlagstücke 50, 52, 54 zur Grobausrichtung jeweils eines Teststreifens 56 auf dem Trägerband 2 vorgesehen. Das Anschlagstück 54 übergreift mit einem Ende 62 das Trägerband 2 und weist eine Anschlagfläche 66 für die Stirnfläche 64 des Teststreifens 56 auf.

Im Abstand einer ganzen Anzahl von Schrittlängen des Trägerbands 2 befindet sich ein auf- und abbewegbarer, federnder Fangrechen 72 für den Teststreifen 20, der noch vor Schluß des Trägerband-Vorschubes abgesenkt wird und den Teststreifen 20 vertikal zur Trägerbandrichtung ausrichtet, und ein weiteres Anschlagstück 22, dem eine Anschlagplatte 30 entsprechend Fig. 1 am anderen Rand des Trägerbands 2 gegenübersteht. An dieser Stelle erfolgt eine Feinausrichtung des Teststreifens 20 durch Anschlag an die Anschlagfläche 28 des Anschlagstücks 22 und Anschlag an den Fangrechen 72.

Unterhalb des Trägerbands 2 befinden sich in einer nicht dargestellten Unterlage Mulden 68, 70 zum Formen von Heftklammern. Oberhalb der Mulden 68, 70 sind auf- und abbewegbare Heftklammernspender 74, 76 vorgesehen.

## Patentansprüche

1. Vorrichtung zum optischen Untersuchen von mit Testflüssigkeit zu tränkenden, langgestreckten, Testfelder aufweisenden Teststreifen (20) mit einem die Teststreifen (20) auf einer einer optischen Meßeinrichtung (10) zugewandten Seite tragenden Träger, mittels dem die Teststreifen (20) schrittweise an der optischen Meßeinrichtung (10) vorbei zu bewegen sind,
**dadurch gekennzeichnet**,
daß der Träger ein Trägerband (2) ist, auf dem die Teststreifen (20) quer zur Längsrichtung des Trägerbands (2) parallel zueinander mit untereinander gleichen Abständen ausgerichtet und wenigstens nächst den Rändern des Trägerbands (2) befestigt werden.

2. Vorrichtung nach Anspruch 1, dadurch gekennzeichnet, daß die Teststreifen (20) wenigstens unterseitig aus einem heißsiegelfähigen Material bestehen, das an wenigstens zwei nächst den Rändern des Trägerbands (2) liegenden Stellen mit dem Trägerband (2) versiegelt ist.

3. Vorrichtung nach Anspruch 1, dadurch gekennzeichnet, daß die Teststreifen (20) an wenigstens zwei nächst den Rändern des Trägerbands (2) liegenden Stellen mittels Heftklammern an dem Trägerband (2) befestigt sind.

4. Vorrichtung nach einem der vorhergehenden Ansprüche, dadurch gekennzeichnet, daß der Abstand der Teststreifen (20) voneinander 2 bis 12 mm beträgt.

5. Vorrichtung nach einem der vorhergehenden Ansprüche, gekennzeichnet durch eine waagerechte Unterlage, über die das Trägerband (2) in seiner Längsrichtung schrittweise zu bewegen ist,
durch über der Unterlage angeordnete Anschlagstücke (13,14,16,18,22; 50,52,54,22) zum Einlegen der Teststreifen (20) und zum Ausrichten der Teststreifen (20) in Längsrichtung und Querrichtung des Trägerbands (2) während der Standzeiten des Trägerbands (2) zwischen seiner schrittweisen Bewegung
und durch über dem Trägerband (2) angeordnete Andruckglieder (40,42; 74,76) und unter dem Trägerband (2) angeordnete Widerlager (36,38; 68,70) zum Befestigen der ausgerichteten Teststreifen (20) auf dem Trägerband (2) während der Standzeiten des Trägerbands (2) zwischen seiner schrittweisen Bewegung.

6. Vorrichtung nach Anspruch 5, dadurch gekennzeichnet, daß die Meßeinrichtung (10) im Abstand wenigstens einer Schrittlänge der Bewegung des Trägerbands (2) stromabwärts der Andruckglieder (40,42; 74,76) und Widerlager (36,38; 68,70) angeordnet ist.

## Claims

1. Device for the optical testing of longitudinally extending test strips (20) having test zones to be impregnated with test liquid with a carrier carrying the test strips (20) on a side facing an optical measurement device (10) by means of which the test strips (20) are to be moved stepwise past the optical measurement device (10), characterised in that the carrier is a carrier band (2) on which the test strips (20) are aligned transversely to the longitudinal direction of the carrier band (2) parallel to one another with equal distances to one another and are fixed at least next to the edges of the carrier band (2).

2. Device according to claim 1, characterised in that the test strips (20) consist, at least on the underside, of a heat-sealable material which is sealed with the carrier band (2) on at least two points lying next to the edges of the carrier band (2).

3. Device according to claim 1, characterised in that the test strips (20) are fixed to the carrier band (2) by means of staples on at least two points lying next to the edges of the carrier band (2).

4. Device according to one of the preceding claims, characterised in that the distance of the test strips (20) from one another amounts to 2 to 12 mm.

5. Device according to one of the preceding claims, characterised by a horizontal base over which the carrier band (2) is movable stepwise in its longitudinal direction, by stop pieces (13,14,16,18,22; 50,52,54,22) arranged above the base for the insertion of the test strips (20) and for the alignment of the test strips (20) in the longitudinal direction and transverse direction of the carrier band (2) during the stationary periods of the carrier band (2) between its stepwise movement and by pressure members (40,42; 74,76) arranged above the carrier band (2) and supports (36,38; 68,70) arranged below the carrier band (2) for the fixing of the aligned test strips (20) on the carrier band (2) during the stationary periods of the carrier band (2) between its stepwise movement.

6. Device according to claim 5, characterised in that the measurement device (10) is arranged at a distance of at least one step length of the movement of the carrier band (2) downstream of the pressure members (40,42; 74,76) and of the supports (36,38; 68,70).

## Revendications

1. Dispositif de contrôle optique de bandes de test (20) longilignes, munies de zones d'examen et devant être imprégnées par un fluide expérimental, comportant un support qui porte les bandes de test (20) sur une face tournée vers un appareil (10) de mesure optique, et au moyen duquel les bandes de test (20) doivent être animées d'un mouvement en mode pas à pas, en regard de l'appareil (10) de mesure optique,
caractérisé par le fait
que le support est une bande de support (2) sur laquelle les bandes de test (20) sont alignées transversalement par rapport au sens longitudinal de cette bande de support (2), parallèlement les unes aux autres et selon des intervalles mutuellement égaux, et sont fixées au moins à proximité des bords de ladite bande de support (2).

2. Dispositif selon la revendication 1, caractérisé par le fait que les bandes de test (20) consistent, au moins à la face inférieure, en un matériau qui peut être thermoscellé et est scellé, à la bande de support (2), en au moins deux zones rapprochées des bords de cette bande de support (2).

3. Dispositif selon la revendication 1, caractérisé par le fait que les bandes de test (20) sont fixées à la bande de support (2), au moyen d'agrafes, en au moins deux zones rapprochées des bords de ladite bande de support (2).

4. Dispositif selon l'une des revendications précédentes, caractérisé par le fait que l'espacement mutuel des bandes de test (20) est compris entre 2 et 12 mm.

5. Dispositif selon l'une des revendications précédentes, caractérisé par une structure horizontale sous-jacente, par l'intermédiaire de laquelle la bande de support (2) doit être animée d'un mouvement pas à pas dans sa direction longitudinale ;
par des pièces de butée (13, 14, 16, 18, 22 ; 50, 52, 54, 22) installées au-dessus de la structure sous-jacente en vue de l'insertion des bandes de test (20) et en vue de l'alignement de ces bandes de test (20), dans le sens longitudinal et dans le sens transversal de la bande de support (2), durant les temps d'immobilisation de cette bande de support (2) interrompant son mouvement pas à pas ;
et par des organes d'application (40, 42 ; 74, 76) installés au-dessus de la bande de support (2), et des contre-butées (36, 38 ; 68, 70) installées au-dessous de cette bande de support (2), en vue de la fixation des bandes de test (20) alignées, sur ladite bande de support (2), durant les temps d' immobilisation de cette bande de support (2) interrompant son mouvement pas à pas.

6. Dispositif selon la revendication 5, caractérisé par le fait que l'appareil de mesure (10) est implanté en aval des organes d'application (40, 42 ; 74, 76) et des contre-butées (36, 38 ; 68, 70), à une distance représentant au moins une longueur de progression du mouvement de la bande de support (2).
